# EUROPEAN PATENT SPECIFICATION

(11) **EP 0 658 267 B1**
(45) Date of publication and mention of the grant of the patent: **08.10.1997**
(21) Application number: 93916121.2
(22) Date of filing: 27.07.1993
(51) Int. Cl.: G06K 7/08, G06K 19/12, G11B 20/00, G11B 5/33

(54) **PROCESSING OF RECORDED DATA**
VERARBEITUNG VON AUFGEZEICHNETEN DATEN
TRAITEMENT DE DONNEES ENREGISTREES

(30) Priority: 27.07.1992 GB 9215924; 15.03.1993 GB 9305273
(43) Date of publication of application: 21.06.1995
(73) Proprietor: CENTRAL RESEARCH LABORATORIES LIMITED, Hayes, Middlesex, UB3 1HH (GB)
(72) Inventor: GREEN, Ian MacDonald, Buckie, Banffshire (GB); WILLCOCK, Simon Nicholas Murray, High Wycombe, Buckinghamshire HP14 3QG (GB)
(74) Representative: Marsh, Robin Geoffrey
(86) International application number: GB9301581
(87) International publication number: WO9402943

(56) References cited:
- DE-A- 2 035 257
- FR-A- 2 441 235
- US-A- 3 027 549

## Description

The present invention relates to a method of, and apparatus for, reading magnetically encoded information comprising:
a gapped magnetic core; a coil wound upon the core and forming part of a tuned circuit;
an oscillator for driving the tuned circuit at a frequency lying on its resonance curve;
means for providing a first signal dependent upon the amplitude of signals occurring within the tuned circuit; and
verification means for verifying the genuiness of the magnetically encoded information, which verification means comprises means for providing a second signal dependent upon the frequency of signals occurring within the tuned circuit.

Substrates bearing magnetically encoded information are increasingly being used, for example, in point-of-sale or automated transaction applications.

A known apparatus of the above general kind is described in our published UK patent number GB 2,035,659. In this apparatus the gapped core and associated coil are held just above and pass over a magnetic stripe. The magnetic stripe comprises alternate sections of permanently aligned ferrous oxide particles interspersed with sections of either differently aligned or randomly oriented ferrous oxide particles. The changes in magnetic permeability of the stripe in the different sections as the core passes over it induce variations in the frequency of the resonant circuit. A signal dependent on this frequency is used to determine whether the stripe under examination is genuine or not.

Whilst the known apparatus operates in an entirely satisfactory manner, a system which offers improved discrimination performance over the prior art is an attractive proposition because of the more widespread use of substrates bearing such magnetically encoded information.

According to one aspect of the present invention an apparatus as defined in the first paragraph is characterized by the verification means further comprising:
means for deriving from the first signal a first plurality of output values representative of signal amplitude variations occurring within the circuit upon relative movement between the coil and the magnetically encoded information;
means for deriving from the second signal a second plurality of output values representative of signal frequency variations occurring within the circuit upon relative movement between the coil and the magnetically encoded information,
means for comparing at least one of the output values representative of signal amplitude variations and at least one of the output values representative of signal frequency variations, or functions thereof, with either other ones of said output values or known reference values, thereby to obtain a plurality of test values derived from the comparison; and
means for combining the test values derived from both said first and said second plurality of output values to provide a combination value, such that a positive indication of genuine magnetically encoded information is obtained in dependence upon the combination value having a defined relationship with a predetermined threshold value.

Hence by provision of several test values, all of which must possess certain minimum or maximum requirements, a potentially more secure discrimination system as between genuine and attempted copies of magnetically encoded information than has hitherto been available is provided.

The present invention, in another aspect, provides a method of reading magnetically encoded information including: passing the magnetically encoded information by a gapped magnetic core which has a coil wound thereupon, the coil forming part of a tuned circuit driven at the resonant frequency by an oscillator; and providing a first signal dependent upon the amplitude of signals occurring within the tuned circuit and a second signal dependent upon the frequency of signals occurring within the tuned circuit; characterized by deriving from the first and second signals a plurality of output values representative of signal amplitude and frequency variations produced within the circuit by the passing; comparing at least one of the output values representative of signal amplitude variations and at least one of the output values representative of signal frequency variations, or functions thereof, with either other ones of said output values or known reference values, thereby obtaining a plurality of test values; and combining the test values derived from both signal amplitude and signal frequency variations to provide a combination value, such that a positive indication of genuine magnetically encoded information is obtained in dependence upon the combination value having a defined relationship with a predetermined threshold value.

The present invention will now be described, by way of example only, with reference to the accompanying drawings, of which;
Figure 1 shows a representation of a known reader of magnetically encoded information ;
Figure 2 illustrates schematically part of an embodiment of the present invention;
Figure 3 illustrates schematically a comparison means employed in the present invention; and,
Figure 4 illustrates graphically the difference detected by an embodiment of the present invention between genuine and attempted copies of magnetically encoded data.

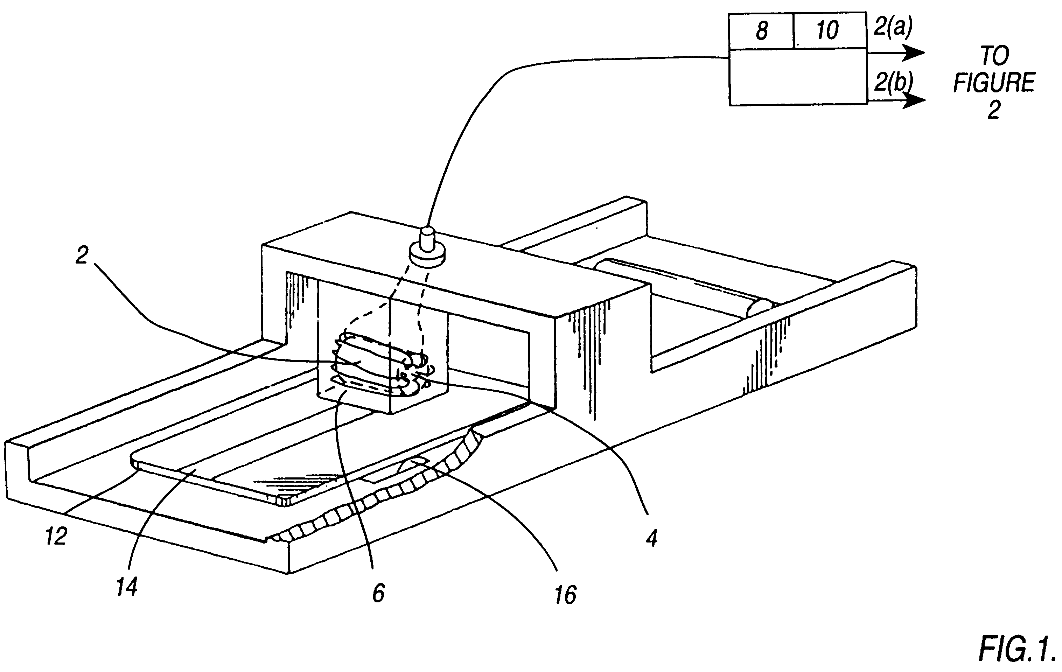

Referring firstly to figure 1, a known reader of magnetically encoded information comprises a gapped magnetic core such as ferrite member 2 which has gap 4 therein. The ferrite member 2 has a coil 6 wound thereupon, the coil 6 forming part of a tuned circuit 8. The tuned circuit 8 is driven at its resonant frequency by an oscillator 10.

A card 12 bearing magnetically encoded information, in this example a permanently structured magnetised stripe 14 is introduced to the reader by roller drivers 16 (only one shown) such that the stripe 14 passes below and adjacent to the core 2. The gap 4 of the core 2 is aligned so that the flux lines across it generated by the tuned circuit 8 lie in a known orientation direction to the direction of the stripe 14.

The resonant frequency of the circuit 8 is chosen to be around 30khz and as the stripe 14 passes by the core 2, the amplitude and resonant frequency of the circuit 8 vary because of the changes in magnetic loss and permeability due to the structured regions of stripe 14 influencing the circuit 8.

It is known that the frequency variations may be used as parameters for determining whether the card 12 in question is in fact genuine or an attempted copy. For example, such frequency variations are used to determine whether or not the stripe 14 is valid and is achieved by determining the occurrence of significant changes in the signal frequency fluctuations.

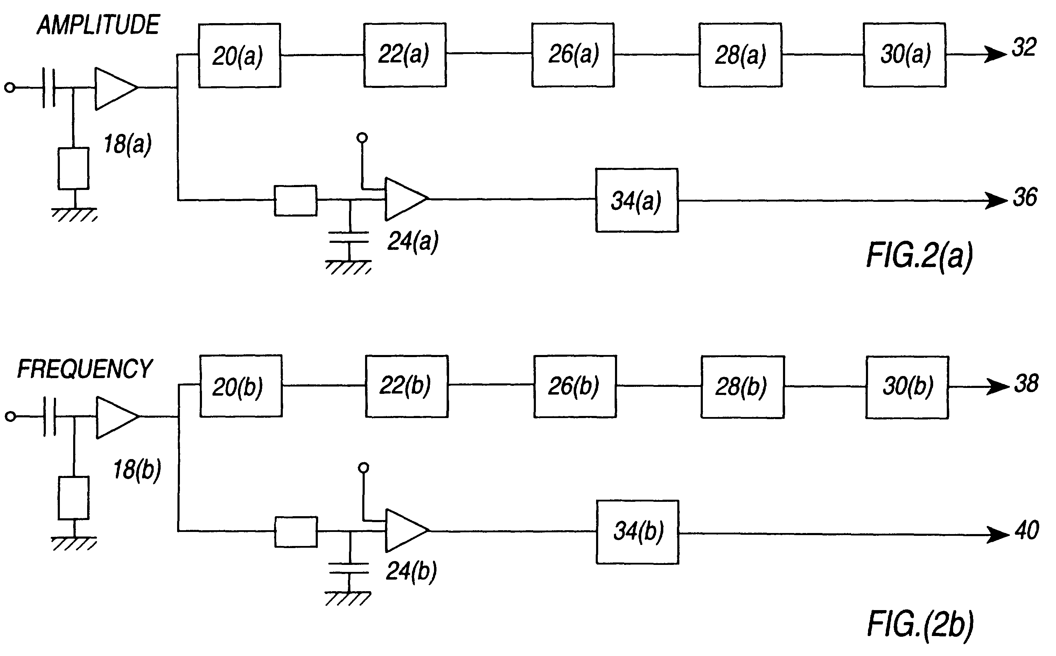

Referring now also to figure 2, it will be seen that the signal amplitude and frequency variations are used as inputs to buffer and filter components in figures 2(a) and 2(b) respectively.

It will be appreciated that because the circuit components in figures 2(a) and 2(b) operate on their signal inputs in similar fashions, then reference will only be made to one, 2(a), yet the reference thereto also applies to the operations performed on signal 2(b).

The buffer and filter components 18(a) receive the signal amplitude variations from the circuit 8. From here, the signal is then split into two portions, an upper portion and a lower portion as seen in figure 2(a).

The upper portion, as shown in figure 2(a), passes via high-pass 20(a) and low-pass 22(a) filters to remove any unwanted noise. The filtered signal is then sent to synchronous detector 26(a) in order to rectify the signal amplitude variations in a known manner. The rectified signal then passes on to an integrator 28(a) to provide amplitude values of the signal amplitude variations. Then a sample-and-hold component 30(a) provides output values 32 indicative of the amplitude levels of the signal amplitude variations received by filter and buffer components 18(a) from the circuit 8. This upper portion of the signal amplitude variations is obtained when the stripe 14 of the card 12 is moved relative to the gap 4 of the core 2, and always being either in contact therewith or spaced by an invariable distance therefrom.

The lower portion of the signal amplitude variations is derived from the relative difference between the amplitude signal when the stripe 14 of card 12 is adjacent the gap 4 of the core 12 and when the stripe 14 is away from the gap 4 so that no magnetic effects are observed. In this lower portion, as shown in the lower split of figure 2(a) after the buffer and filter components 18(a), the signal passes via a low-pass filter and temperature compensation arrangement 24(a) and on to a further sample-and-hold component 34(a). This then provides an output signal 36 indicative of the change in amplitude signal as described above.

Thus signal 32 is indicative of signal amplitude modulations as the stripe 14 passes relative to the gap 4, yet signal 36 is indicative of the change in amplitude signal variations when the strip 14 is adjacent the gap 4 relative to any signal produced at the gap 4 when the stripe 14 is not present.

It will be understood that the signal frequency variations in figure 2(b) provide frequency modulation values 38 and frequency change values 40 in the same manner as described above.

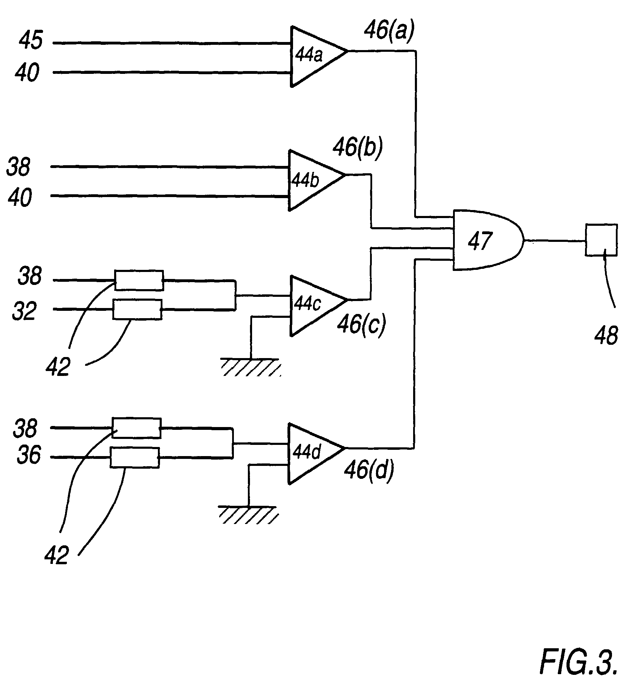

The four output values 32,36,38, and 40 are then passed, in the parallel arrangement shown in figure 3, to a means for comparing the output values, in this example resistors 42 and comparators 44.

The comparator 44(a) receives both the output value 40 and known reference voltage 45. The comparator 44(a) will provide a test value output based upon its two inputs. This test value will be high if the output value 40 exceeds the value of the reference voltage 45 and low if not.

Comparator 44(b) operates in a similar manner to that of comparator 44(a), however a test value output which is high is only produced if output value 40 is greater than output value 38.

Comparator 44(c) will produce a high test value if the output value 38 coupled with a value dependent upon its associated resistor 42 and added to the output value 32 is greater than the zero potential value of the other comparator 44(c) input.

Comparator 44(d) operates in a similar fashion to comparator 44(c), except that the two relevant output values under consideration are 38 and 36.

Thus the resultant outputs of all comparators 44 are four test values 46(a)-(d), each of which is either high or low depending upon the inputs to these comparators.

A means for combining these four test values 46(a)-(d), in this example AND-gate 47 receives each such value and provides therefrom a combination value 48. In dependence upon this combination value 48 exceeding a present threshold value, then an output from the AND-gate 47 provides a positive indication of genuine magnetically encoded information. In the current example, if any one of the test values is low, then no such indication is given and the card 12 and stripe 14 are rejected.

Such acceptance/rejection is not an issue germane to the patentability of the present invention and so will not be further described herein, although understanding of such is assumed.

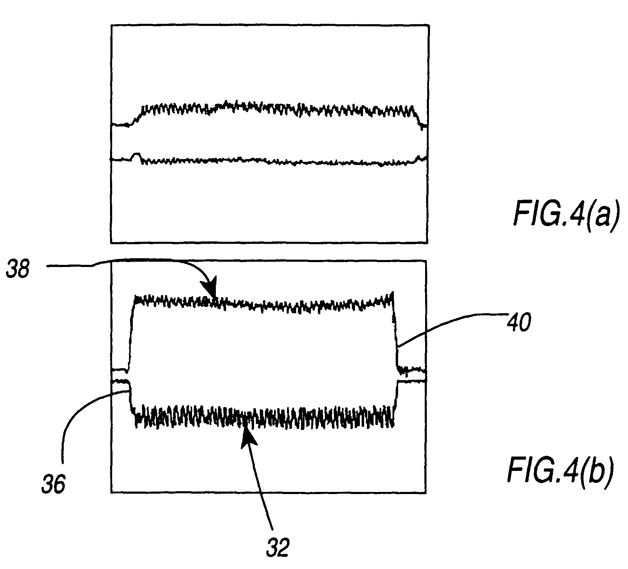

Figures 4 illustrate the traces seen by comparing a genuine figure 4(b), with an attempted copy figure 4(a), of stripe 14. The four signal amplitude and frequency modulation and change values, 32,36,38,40 respectively are shown in figures 4. The difference between the genuine and attempted copies stripes 14 is thus clearly visible.

Those skilled in the art will appreciate that, whilst in the above example an AND gate 47 exemplifies the means for combining the test values, any suitable combination means may be used so long as a predetermined relationship exists between the combination value and the threshold value. For example, a predetermined threshold may be set such that all test values input to the means for combining must be low for a positive output to result, or all test values must be within certain threshold windows.

It will be apparent that whilst only four test values have been illustrated in the above example, any number of test values and any suitable derivation may be employed. For example, the means for comparing the output values need not simply analyse the output values, per se. Functions or values derived therefrom may also yield useful comparison results for providing test values. Examples of such are the square or square root of an output value; the division of one output value, or combination of several, by another or others of the output values.

It will be appreciated by those skilled in the art, and particularly with reference to figures 4 that parity, that is the polarity of the signals and derived values, is important. if, for example, the polarity of the changes 40,36 were not in the correct sense, then positive discrimination would not occur. Hence, parity is a further discriminatory feature of the present invention.

It will be apparent that other criteria may be employed to provide additional verification parameters to those described hereabove. For example, visual identification means or hidden ultra-violet reflective codes which may only be seen when illuminated with ultra-violet light may also be placed on the card 12 adjacent or on top of the stripe 14.

Those skilled in the art will realise that modifications to the above may be made whilst still remaining within the scope of the invention as defined by the appended claims. For example, the temperature compensator included in components 24(a) and (b) may not be required for putting the invention into effect.

It will be apparent also that the concepts of the above invention are equally applicable to the so-called "swipe reader". In such a reader the card 12 is swiped past the gap 4 of core 2 under manual control without the need for drive rollers 16.

## Claims

1. Apparatus for reading magnetically encoded information (14) comprising:
a gapped magnetic core (2);
a coil (6) wound upon the core (2) and forming part of a tuned circuit (8);
an oscillator (10) for driving the tuned circuit (8) at a frequency lying on its resonance curve;
means for providing a first signal dependent upon the amplitude of signals occurring within the tuned circuit; and
verification means (18,20,22,24,26,28,30,34,42,44,47) for verifying the genuineness of the magnetically encoded information, which verifications means comprises means for providing a second signal dependent upon the frequency of signals occurring within the tuned circuit,
characterized by the verification means further comprising:
means (18,20,22,24,26,28,30,34) for deriving from the first signal a first plurality of output values (32,36) representative of signal amplitude variations occurring within the circuit (8) upon relative movement between the coil (6) and the magnetically encoded information (14);
means (18,20,22,24,26,28,30,34) for deriving from the second signal a second plurality of output values (38,40) representative of signal frequency variations occurring within the circuit (8) upon relative movement between the coil (6) and the magnetically encoded information (14);
means (44) for comparing at least one of the output values (32,36) representative of signal amplitude variations and at least one of the output values (38,40) representative of signal frequency variations, or functions thereof, with either other ones of said output values or known reference values (45), thereby to obtain a plurality of test values (46) derived from the comparison; and
means (47) for combining the test values (46) derived from both said first and said second plurality of output values (32, 36; 38, 40) to provide a combination value (48), such that a positive indication of genuine magnetically encoded information is obtained in dependence upon the combination value (48) having a defined relationship with a predetermined threshold value.

2. Apparatus according to claim 1 wherein the signal amplitude and frequency variations comprise: amplitude and frequency changes from respective reference values; and amplitude
and frequency variations about the amplitudes and frequencies which result from such changes.

3. Apparatus according to claim 2 wherein the means for deriving a plurality of output values includes first (20a, 22a, 26a, 28a, 30a; 20b, 22b, 26b, 28b, 30b) and second pairs of circuits (24a, 34a; 24b, 34b), the circuits of the first pair having their inputs coupled to the means for providing said first signal and the means for providing said second signal respectively, each circuit of the first pair including a band-pass filter, a rectifier, an integrator and a sample-and-hold component in this order, the circuits of the second pair having their inputs coupled to the means for providing said first signal and the means for providing said second signal respectively, each circuit of the second pair including a low-pass filter and a sample-and-hold component in that order.

4. Apparatus according to Claim 1 wherein the means for comparing the output values comprises a plurality of comparator (44) arranged to receive predetermined permutations of the output values and provide therefore, from each comparator, a single test value.

5. Apparatus according to claim 4 wherein the predetermined permutations of the output values comprise either the output values themselves, or functions thereof or mathematically derived therefrom.

6. Apparatus according to Claim 1 wherein the means for combining the test values comprises an AND-gate.

7. Apparatus according to Claim 1 wherein the defined relationship is that the combination value is either greater or less than the predetermined threshold value.

8. A method of reading magnetically encoded information (14) including: passing the magnetically encoded information (14) by a gapped magnetic core (2) which has a coil (6) wound thereupon, the coil (6) forming part of a tuned circuit (8) driven at the resonant frequency by an oscillator (10); and providing a first signal dependent upon the amplitude of signals occurring within the tuned circuit and a second signal dependent upon the frequency of signals occurring within the tuned circuit; characterized by deriving from the first and second signals a plurality of output values (32,36,38,40) representative of signal amplitude and frequency variations produced within the circuit (8) by the passing; comparing at least one of the output values (32,36) representative of signal amplitude variations and at least one of the output values (38,40) representative of signal frequency variations, or functions thereof, with either other ones of said output values or known reference values (45), thereby obtaining a plurality of test values (46); and combining the test values (46) derived from both signal amplitude and signal frequency variations to provide a combination value (48), such that a positive indication of genuine magnetically encoded information is obtained in dependence upon the combination value (48) having a defined relationship with a predetermined threshold value.

## Revendications

1. Appareil pour lire des informations codées magnétiquement, comprenant:
un noyau magnétique avec entrefer (2);
une bobine (6) enroulée sur le noyau (2) et faisant partie d'un circuit accordé (8);
un oscillateur (10) pour commander le circuit accordé (8) à une fréquence se trouvant sur sa courbe de résonance;
des moyens pour fournir un premier signal dépendant de l'amplitude des signaux apparaissant à l'intérieur du circuit accordé; et
des moyens de vérification (18, 20, 22, 24, 26, 28, 30, 34, 42, 44, 47) pour vérifier l'authenticité des informations codées magnétiquement, lesquels moyens de vérification comprennent des moyens pour fournir un deuxième signal dépendant de la fréquence des signaux apparaissant à l'intérieur du circuit accordé
caractérisé par le fait que les moyens de vérification comprennent en outre:
des moyens (18, 20, 22, 24, 26, 28, 30, 34) pour déterminer d'après le premier signal, une première pluralité de valeurs de sortie (32, 36) représentant les variations d'amplitude du signal apparaissant à l'intérieur du circuit (8) lors d'un mouvement relatif entre la bobine (6) et les informations codées magnétiquement (14);
des moyens (18, 20, 22, 24, 26, 28, 30, 34) pour déterminer d'après le deuxième signal, une deuxième pluralité de valeurs de sortie (38, 40) représentant les variations de fréquence du signal apparaissant à l'intérieur du circuit (8) lors d'un mouvement relatif entre la bobine (6) et les informations codées magnétiquement (14);
des moyens (44) pour comparer au moins l'une des valeurs de sortie (32, 36) représentant les variations d'amplitude du signal et au moins l'une des valeurs de sortie (38, 40) représentant les variations de fréquence du signal, ou des fonctions de celles-ci, à l'une ou l'autre desdites valeurs de sortie ou valeurs de référence connues (45), de façon à obtenir une pluralité de valeurs de test (46) déterminées d'après la comparaison; et
des moyens (47) pour associer les valeurs de test (46) déterminées d'après à la fois ladite première et ladite deuxième pluralité de valeurs de sortie (32, 36; 38, 40), pour fournir une valeur de combinaison (48), telle qu'une indication positive d'informations codées magnétiquement authentique soit obtenue selon la valeur de combinaison (48) ayant une relation définie avec une valeur de seuil prédéterminée.

2. Appareil selon la revendication 1, dans lequel les variations d'amplitude et de fréquence comprennent: des variations d'amplitude et de fréquence par rapport à des valeurs de référence respectives d'amplitude et de fréquence; et des variations d'amplitude et de fréquence autour des amplitudes et des fréquences provenant de ces variations.

3. Appareil selon la revendication 2, dans lequel les moyens pour déterminer une pluralité de valeurs de sortie comportent une première (20a, 22a, 26a, 28a, 30a; 20b, 22b, 26b, 28b, 30b) et une deuxième paires de circuits (24a, 34a; 24b, 34b), les circuits de la première paire ayant leurs entrées respectivement couplées aux moyens pour fournir ledit premier signal et aux moyens pour fournir ledit deuxième signal, chaque circuit de la première paire comportant un filtre passe bande, un redresseur, un intégrateur et un composant échantillonneur-bloqueur dans cet ordre, les circuits de la deuxième paire ayant leurs entrées respectivement couplées aux moyens pour fournir ledit premier signal et aux moyens pour fournir ledit deuxième signal, chaque circuit de la deuxième paire comportant un filtre passe bas et un composant échantillonneur-bloqueur dans cet ordre.

4. Appareil selon la revendication 1, dans lequel les moyens pour comparer les valeurs de sortie comprennent une pluralité de comparateurs (44) agencés de façon à recevoir des permutations prédéterminées des valeurs de sortie et fournir ainsi, depuis chaque comparateur, une valeur de test unique.

5. Appareil selon la revendication 4, dans lequel les permutations prédéterminées des valeurs de sortie comprennent soit les valeurs de sortie elles-mêmes, soit des fonctions de celles-ci ou qui en sont mathématiquement déduites.

6. Appareil selon la revendication 1, dans lequel les moyens pour associer les valeurs de test comprennent une porte ET.

7. Appareil selon la revendication 1, dans lequel la relation définie est que la valeur de combinaison est soit supérieure soit inférieure à la valeur de seuil prédéterminée.

8. Procédé pour lire magnétiquement des informations codées (14), comportant: la transmission des informations codées magnétiquement (14) par un noyau magnétique avec entrefer (2) qui comporte une bobine (6) enroulée sur celui-ci, la bobine (6) faisant partie d'un circuit accordé (8) commandé à la fréquence de résonance par un oscillateur (10); et fournissant un premier signal dépendant de l'amplitude des signaux apparaissant à l'intérieur du circuit accordé, et un deuxième signal dépendant de la fréquence des signaux apparaissant à l'intérieur du circuit accordé; caractérisé par la détermination d'après le premier et le deuxième signaux d'une pluralité de valeurs de sortie (32, 36, 38, 40) représentant les variations d'amplitude et de fréquence du signal produites à l'intérieur du circuit (8) par la transmission; la comparaison d'au moins l'une des valeurs de sortie (32, 36) représentant les variations d'amplitude du signal et d'au moins l'une des valeurs de sortie (38, 40) représentant les variations de fréquence du signal, ou des fonctions de celles-ci, à l'une ou l'autre desdites valeurs de sortie ou valeurs de référence connues (45), de façon à obtenir une pluralité de valeurs de test (46); et l'association des valeurs de test (46) déterminées d'après à la fois les variations d'amplitude du signal et de fréquence du signal, pour fournir une valeur de combinaison (48) telle qu'une indication positive d'informations codées magnétiquement authentiques est obtenue en fonction de la valeur de combinaison (48) ayant une relation définie avec une valeur de seuil prédéterminée.

## Patentansprüche

1. Vorrichtung zum Lesen von kodierten Informationen (14) umfassend:
einen mit einem Spalt versehenen magnetischen Kern (2);
eine auf den Kern (2) gewickelte Spule (6), die einen Teil einer abgestimmten Schaltung (8) bildet:
einen Oszillator (10) zur Ansteuerung der abgestimmten Schaltung (8) mit einer Frequenz, die auf ihrer Resonanzkurve liegt;
Mittel zur Erzeugung eines ersten Signals, das von der Amplitude von in der abgestimmten Schaltung auftretenden Signalen abhängt; und
Verifizierungsmittel (18, 20, 22, 24, 26, 28, 30, 34, 42, 44, 47) zur Verifizierung der Echtheit der magnetisch kodierten Informationen, wobei die Verifizierungsmittel Mittel umfassen, um ein zweites Signal zu erzeugen, das von der Frequenz von Signalen abhängt, die in der abgestimmten Schaltung auftreten,
dadurch gekennzeichnet, daß die Verifizierungsmittel ferner umfassen:
Mittel (18, 20, 22, 26, 28, 30, 34), um von dem ersten Signal eine erste Vielzahl von Ausgangswerten (32, 36) abzuleiten, die Signalamplitudenänderungen darstellen, die in der Schaltung (8) bei relativer Bewegung zwischen der Spule (6) und den magnetisch kodierten Informationen (14) auftreten;
Mittel (18, 20, 22, 24, 26, 28, 30, 34), um von dem zweiten Signal eine zweite Vielzahl von Ausgangswerten (38, 40) abzuleiten, die Signalfrequenzänderungen darstellen, die in der Schaltung (8) bei relativer Bewegung zwischen der Spule (6) und den magnetisch kodierten Informationen (14) auftreten;
Mittel (44), um wenigstens einen der Ausgangswerte (32, 36), die Signalamplitudenänderungen darstellen, und wenigstens einen der Ausgangswerte (38, 40), die Signalfrequenzänderungen darstellen, oder Funktionen davon mit entweder anderen der Ausgangswerte oder bekannten Bezugswerten (45) zu vergleichen, um dadurch eine Vielzahl von Testwerten (46) zu erhalten, die von dem Vergleich abgeleitet werden; und
Mittel (47) zum Kombinieren der Testwerte (46), die sowohl von der ersten als auch von der zweiten Vielzahl von Ausgangswerten (32, 36; 38, 40) abgeleitet werden, um einen Kombinationswert (48) zu erzeugen, so daß eine positive Anzeige von echten magnetisch kodierten Informationen in Abhängigkeit von dem Kombinationswert (48) erhalten wird, der eine definierte Beziehung zu einem vorgegebenen Schwellwert hat.

2. Vorrichtung nach Anspruch 1, bei der die Signalamplituden- und die Signalfrequenzänderungen umfassen: Amplituden- und Frequenzänderungen von entsprechenden Bezugswerten; und Amplituden- und Frequenzänderungen bei den Amplituden und Frequenzen, die von solchen Änderungen herrühren.

3. Vorrichtung nach Anspruch 2, bei der die Mittel zur Ableitung einer Vielzahl von Ausgangswerten erste Paare (20a, 22a, 26a, 28a, 30a; 20b, 22b, 26b, 28b, 30b) und zweite Paare (24a, 34a; 24b, 34b) von Schaltungen enthalten, wobei die Eingänge des ersten Paares mit den Mitteln zur Erzeugung des ersten Signals bzw. den Mitteln zur Erzeugung des zweiten Signals verbunden sind, wobei jede Schaltung des ersten Paares ein Bandpaßfilter, einen Gleichrichter, einen Integrator und eine Abtast- und Halte-Komponente in dieser Reihenfolge enthält, wobei die Eingänge des zweiten Paares mit den Mitteln zur Erzeugung des ersten Signals bzw. den Mitteln zur Erzeugung des zweiten Signals verbunden sind, wobei jede Schaltung des zweiten Paares ein Tiefpaßfilter, eine Abtast- und Halte-Komponente in dieser Reihenfolge enthält.

4. Vorrichtung nach Anspruch 1, bei der die Mittel zum Vergleich der Ausgangswerte eine Vielzahl von Komparatoren (44) zum Empfang vorgegebener Permutationen der Ausgangswerte umfassen und daher von jedem Komparator einen einzelnen Testwert liefern.

5. Vorrichtung nach Anspruch 4, bei der die vorgegebenen Permutationen der Ausgangswerte entweder die Ausgangswerte selbst oder Funktionen davon oder mathematisch davon abgeleitete Werte umfassen.

6. Vorrichtung nach Anspruch 1, bei der die Mittel zum Kombinieren der Testwerte ein UND-Tor umfassen.

7. Vorrichtung nach Anspruch 1, bei der die definierte Beziehung darin besteht, daß der Kombinationswert entweder größer oder kleiner als der vorgegebene Schwellwert ist.

8. Verfahren zum Lesen magnetisch kodierter Informationen (14) umfassend: Hindurchführen der magnetisch kodierten Informationen (14) durch einen mit Spalt versehenen magnetischen Kern (2), um den eine Spule (6) gewickelt ist, wobei die Spule (6) einen Teil einer abgestimmten Schaltung (8) bildet, die mit der Resonanzfrequenz durch einen Oszillator (10) angesteuert wird; und Erzeugen eines ersten Signals in Abhängigkeit von der Amplitude von in der abgestimmten Schaltung auftretenden Signalen, und eines zweiten Signals in Abhängigkeit von der Frequenz von in der abgestimmten Schaltung auftretenden Signalen; gekennzeichnet durch: Ableiten einer Vielzahl von Ausgangswerten (32, 36, 38, 40) von dem ersten und zweiten Signal, die Signalamplituden- und Signalfrequenzänderungen darstellen, die innerhalb der Schaltung durch das Hindurchführen erzeugt werden; Vergleichen wenigstens einen der Ausgangswerte (32, 36), die Signalamplitudenänderungen darstellen, und wenigstens einen der Ausgangswerte (38, 40), die Signalfrequenzänderungen oder Funktionen davon darstellen, mit entweder anderen der Ausgangswerte oder bekannten Bezugswerten, um dadurch eine Vielzahl von Testwerten (46) zu erhalten; und Kombinieren der sowohl von Signalamplitudenänderungen als auch von Signalfrequenzänderungen abgeleiteten Testwerte (46), um einen Kombinationswert (48) zu erzeugen, so daß eine positive Anzeige von echten magnetisch kodierten Informationen in Abhängigkeit von dem Kombinationswert (48) gewonnen wird, der eine definierte Beziehung zu einem vorgegebenen Schwellwert hat.
